(19) Europäisches Patentamt
European Patent Office
Office européen des brevets

(11) EP 2 914 833 B1

(12) **EUROPÄISCHE PATENTSCHRIFT**

(45) Veröffentlichungstag und Bekanntmachung des Hinweises auf die Patenterteilung:
**15.05.2019 Patentblatt 2019/20**

(21) Anmeldenummer: **13780355.7**

(22) Anmeldetag: **23.10.2013**

(51) Int Cl.:
*F02D 35/02* (2006.01)    *F02D 41/00* (2006.01)
*F02D 41/14* (2006.01)    *G01L 23/22* (2006.01)
*F02D 41/22* (2006.01)    *G01M 15/04* (2006.01)

(86) Internationale Anmeldenummer:
**PCT/EP2013/072120**

(87) Internationale Veröffentlichungsnummer:
**WO 2014/067821 (08.05.2014 Gazette 2014/19)**

(54) **VERFAHREN UND VORRICHTUNG ZUR ERKENNUNG EINER GLÜHZÜNDUNG EINES VERBRENNUNGSMOTORS IN EINEM KRAFTFAHRZEUG**

METHOD AND APPARATUS OF DETECTION OF AN AUTOIGNITION OF A COMBUSTION ENGINE IN A VEHICLE

MÉTHODE ET DISPOSITIF DE DÉTECTION D'UN AUTO-ALLUMAGE D'UN MOTEUR À COMBUSTION DANS UN VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.11.2012 DE 102012021517**

(43) Veröffentlichungstag der Anmeldung:
**09.09.2015 Patentblatt 2015/37**

(73) Patentinhaber: **Volkswagen Aktiengesellschaft 38440 Wolfsburg (DE)**

(72) Erfinder:
• **TREBESIUS, Samuel**
  **29399 Wahrenholz (DE)**
• **KLIE, Stefan**
  **38102 Braunschweig (DE)**
• **SPRYSCH, Andreas**
  **31234 Edemissen (DE)**
• **WILKE, Stefanie**
  **38518 Gifhorn (DE)**
• **THAUER, Florian**
  **38518 Gifhorn (DE)**

(56) Entgegenhaltungen:
DE-A1- 4 138 765      DE-A1-102011 108 307
DE-B3-102007 024 415   DE-B3-102009 008 247
DE-C1- 19 544 720

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren und eine Vorrichtung zur Erkennung einer Glühzündung eines Verbrennungsmotors in einem Kraftfahrzeug gemäß der Oberbegriffe des Anspruchs 1 und des Anspruchs 9.

Unter Vorentflammung versteht man einen Vorgang, der zu einer unkontrollierten und vorzeitigen Entflammung des Kraftstoff-Luft-Gemisches gegen Ende der Kompressionsphase, besonders in Ottomotoren mit hohem Verdichtungsverhältnis bzw. mit Aufladung auftritt, ohne dass bis dahin vom Zündsystem ein Zündfunke erzeugt worden ist. Eine Glühzündung ist ein spezieller Unterfall der Vorentflammung, die aufgrund eines heißen Bauteils im Zylinder erzeugt wird und ohne Klopfpegel verläuft. Die durch die Vorentflammung beziehungsweise die Glühzündung bedingter Anstieg der Temperatur und die Erhöhung des Druckes werden durch die noch nicht abgeschlossene Verdichtung im Brennraum verstärkt. Extreme Temperatur- und Druckwerte im Brennraum sind die Folge, die letztendlich zur Zerstörung von Motorbauteilen führen können.

Zur Erkennung der Vorentflammung wird üblicherweise das Signal vom Klopfsensor genutzt, um die hochfrequenten Schwingungen, die meist mit der Vorentflammung einhergehen, zu detektieren.

Aus dem Dokument DE 10 2007 024 415 B3 ist ein Verfahren zur Erkennung einer Glühzündung einer fremdgezündeten Brennkraftmaschine mit wenigstens einem Zylinder bekannt. Gemäß dem Verfahren wird eine Drehgeschwindigkeit der Kurbelwelle eines ersten Zeitintervalls im Arbeitsablauf der Brennkraftmaschine gemessen. Ferner wird ein Klopfsignal mittels eines Körperschallsensors während eines zweiten Zeitintervalls im Arbeitsablauf der Brennkraftmaschine erkannt. Eine Glühzündung des Zylinders wird erkannt, wenn die Drehgeschwindigkeit der Kurbelwelle gegenüber einem Vergleichswert verlangsamt ist, und aufgrund des Klopfsignals eine klopfende Verbrennung erkannt wird.

Nachteilig bei diesen Verfahren ist, dass keine leistungsfähige Glühzündungserkennung durchgeführt wird. Insbesondere können Erkennungsverfahren, die auf der Nutzung des Klopfsignals basieren, keine Glühzündung erkennen, da die Glühzündungen häufig ohne hochfrequente Anteile auftreten.

Das Dokument DE 195 44 720 C1 betrifft eine Vorrichtung und ein Verfahren zum Bestimmen eines Laufunruhewertes einer Brennkraftmaschine. Für einen Zündtakt für jeden Zylinder wird eine Differenz aus zwei Kurbelwellensektorzeitspannen gebildet, um einen Luafunruhe-Grundterm zu gewinnen. Es wird ein Laufunruhe-Korrekturterm durch Medianbildung mehrerer Kurbelwellensektorzeitspannen bestimmt und zur Korrektur des Grundterms benutzt, so dass ein Laufunruhewert für jeden der Zylinder erhalten wird.

Von diesem Hintergrund ist die Aufgabe der vorliegenden Erfindung, eine verbesserte Erkennung der Glühzündung einer Brennkraftmaschine zu ermöglichen.

Diese Aufgabe wird erfindungsgemäß durch ein Verfahren mit den Merkmalen des Patentanspruchs 1 gelöst.

Erfindungsgemäß wird ein Verfahren zur Erkennung einer Glühzündung eines Kraftstoff-Luft-Gemisches in einem Zylinderraum einer Brennkraftmaschine mit wenigstens einem ersten und einem anderen Zylinder, die mit einer Kurbelwelle verbunden sind, durchgeführt, wobei Teilsegmentzeiten des ersten Zylinder gemessen werden, dadurch gekennzeichnet, dass Teilsegmentzeiten des zumindest einen anderen Zylinders gemessen werden und ein Referenzmerkmal für die Glühzündung durch einen Vergleich von Teilsegmentzeiten des ersten Zylinders mit Teilsegmentzeiten des zumindest einen anderen Zylinders gebildet wird und anschließend ein Signal für die Erkennung der Glühzündung als Funktion des Vergleichs generiert wird.

Vorteilhafte Weiterbildungen der Erfindung sind in den abhängigen Ansprüchen charakterisiert.

Ein Vorteil des erfindungsgemäßen Verfahrens besteht darin, dass durch den Vergleich der Teilsegmentzeiten mit den Teilsegmentzeiten der anderen Zylinder ein Referenzmerkmal nachgeführt wird, wodurch eine Robustheit gegenüber Fehlerkennungen gewährleistet werden kann, wobei die Fehlererkennungen durch Antriebsstrangschwingungen herbeigeführt werden. Unter Segmentzeit wird die Zeitdauer verstanden, die die Kurbelwelle benötigt, um eine festgelegte Winkelspanne, d.h. ein festgelegtes Segment, drehen. Ein Zylindersegment kann bei einer 6-Zylinder-Viertaktbrennkraftmaschine z.B. 120 Grad betragen. Die Segmentzeit eines Zylinders ist die Zeit, die die Kurbelwelle benötigt, um die festgelegten 120 Grad zu überstreichen. Ein Zylindersegment kann beispielsweise ein Arbeitstakt, d.h. ein Verbrennungstakt des jeweiligen Zylinders sein, in dem der angesaugte Kraftstoff verbrannt wird. Komplette Segmentzeiten nutzen damit zu lange Dauer, um sensibel auf eine Glühzündung zu reagieren. Eine komplette Segmentzeit dauert zu lange, um ein aussagekräftiges Merkmal zu bilden und sensibel auf eine Glühzündung zu reagieren. Der lokal um den oberen Totpunkt (ZOT) auftretende Effekt wird bei der Nutzung gesamter Segmentzeiten verschliffen. Deshalb sind erfindungsgemäß die Segmentzeiten in kleinere Teilsegmentzeiten unterteilt.

Durch die erfindungsgemäße Erkennung kann der Verbrennungsmotor wirksamer geschützt werden. Eine frühzeitige Erkennung der Glühzündung kann die Einleitung der Gegenmaßnahmen beschleunigen und damit die Zerstörung des Verbrennungsmotors vermeiden. Darüber hinaus kann durch die Benutzung der Teilsegmentzeiten das komplette Drehzahlband abgedeckt werden. Einzelne Zahnzeiten sind im hohen Drehzahlbereich zu verrauscht, um diese entsprechend auszuwerten. Durch das Nutzen von mehreren Zahnzeiten wird dieses Problem gelöst.

Ferner setzt das Verfahren auf bereits vorhandene Sensorik und Aktuatorik auf und kann somit ohne weitere Hardware-Komponenten in die vorhandene Motorsteuerung integriert werden.

Bevorzugt ist eine Ausführungsform des Verfahrens, bei dem das Signal für die Glühzündung unabhängig von einem Klopfsignal erzeugt werden kann. Damit wird nur ein Merkmal zur Erkennung von Glühzündungen, nämlich ein Referenzmerkmal gebildet aus den Teilsegmentzeiten, genutzt. Es ist damit nicht notwendig zusätzlich das Körperschallsignal vom Klopfsensor zu nutzen und eine Eskalationsstrategie hierüber umzusetzen. Dadurch können auch Glühzündungen ohne hochfrequenten Anteil erkannt werden sowie eine zuverlässige Erkennung gewährleistet werden.

In bevorzugter Ausführungsform können die Teilsegmente der Kurbelwelle frei wählbar sein. Dadurch ist es möglich ein Kriterium zu generieren, welches eine sehr hohe Trennschärfe im Bezug auf die Erkennung von Glühzündungen aufweist. Durch die freiwählbaren Segmentzeiten kann eine vom Antriebsstrang unabhängige Anpassung umgesetzt werden und dadurch das größtmögliche Potential aus dem Signal ausgenutzt werden.

Erfindungsgemäß kann das Teilsegment im Bereich von oberem Totpunkt (ZOT) liegen. Die Vorentflammung beziehungsweise die Glühzündung liegt in den meisten Fällen im Bereich von oberem Totpunkt. In wenigen Fällen verlagert sich jedoch eine Vorentflammung zu noch früheren Zeitpunkten bezüglich dem ZOT. Die Wahl des Teilsegments ist nicht abhängig von der Lage der Druckausprägung. Eine Abbremsung der Kurbelwelle wird durch den Energieumsatz vor dem ZOT beschrieben, Je mehr Energie vorher umgesetzt wurde, umso größer die Abbremsung und damit auch umso länger die Teilsegmentzeit.

Erfindungsgemäß kann die Glühzündung erkannt werden, wenn die Teilsegmentzeit des ersten Zylinders eine festgelegte Zeitdauer gegenüber der Teilsegmentdauer zumindest des anderen Zylinders verlängert ist.

Erfindungsgemäß wird das Referenzmerkmal durch eine verallgemeinerte Formel für m Zylinder berechnet:

$$\text{Referenzmerkmal } n = (\text{Teilsegmentzeit}_n - 1/(2*(m-1))* \Sigma\ i = n - m + 1, \ldots, n-1, n+1, \ldots,$$
$$n+m-1 \text{Teilsegmentzeit}_i) / \text{Teilsegmentzeit}_n^3$$

Danach wird die Teilsegmentzeit des aktuellen Zylinders von dem Mittelwert der Teilsegmentzeiten der anderen Zylinder abgezogen. Der Mittelwert wird dabei über die vorangegangenen m Zylinder und die nachfolgenden m Zylinder berechnet - wobei der aktuelle Zylinder von der Mittelwertberechnung ausgenommen ist. Die Division mit der Teilsegmentzeit[3] geschieht, um die Trennschärfe zu erhöhen, im Rahmen eines heuristischen Ansatzes.

Die alleinige Teilsegmentzeit unterliegt starken Schwankungen je nach Last und Drehzahl - ist also als alleiniges Merkmal unzureichend. Deswegen wird von der Teilsegmentzeit der Mittelwert anderer Teilsegmentzeiten abgezogen, um ein Vergleichsmerkmal zu erhalten. In diesem Mittelwert werden die angrenzenden Zylinder zusammengefasst, mit Ausnahme des ersten (aktuellen) Zylinders. Bei einer Glühzündung hat ein Zylinder eine deutlich veränderte, bevorzugt verlängerte, Teilsegmentzeit gegenüber den anderen. Durch die Einbeziehung des aktuellen beziehungsweise des ersten Zylinders in die Mittelwertberechnung führt zu einem Verlust von Trennschärfe.

Normale Verbrennungen werden Werte von idealerweise Null haben, das heißt jede Teilsegmentzeit aller Zylinder ist gleich lang. In der Realität schwanken die Teilsegmentzeiten im regulären Fall um den Betrag Null. Bei einer Glühzündung ist eine Teilsegmentzeit gegenüber den anderen stark erhöht und damit als Merkmal deutlich größer als Null. Die Merkmale der anderen Zylinder werden in diesem Fall leicht ins Negative gehen. Konkrete Wertebereiche sind von der Wahl des Teilsegments, von der Brennkraftmaschine und vom Antriebsstrang (Zweimassenschwungrad) abhängig.

Eine Brennkraftmaschine hat typischerweise ein Steuergerät, das die Steuerung, Regelung und Überwachung von Motorfunktionen übernimmt. Zweckmäßig kann die das erfindungsgemäße Verfahren in einem Speicher eines Motorsteuergerätes als programmgesteuerte Funktion hinterlegt sein.

Eine besonders vorteilhafte Anordnung kann darin bestehen, dass diese in ein Kraftfahrzeug eingebaut ist, dessen Brennkraftmaschine ein Steuergerät enthält, in dessen Speicher die programmgesteuerte Erfindung als Funktion hinterlegt ist.

Das Kraftfahrzeug kann ein schienenloses Radfahrzeug sein.

Weitere Vorteile und vorteilhafte Ausführungsformen und Weiterbildungen der Erfindung werden anhand der nachfolgenden Beschreibung unter Bezugnahme auf die Figuren dargestellt. Es zeigt im Einzelnen:

Fig. 1    ist eine schematische Darstellung einer Ausführungsform des erfindungsgemäßen Verfahrens und

Fig. 2    eine Ausführungsform des erfindungsgemäßen Fahrzeugs mit einem im Steuergerät als Funktion implementierten Verfahren

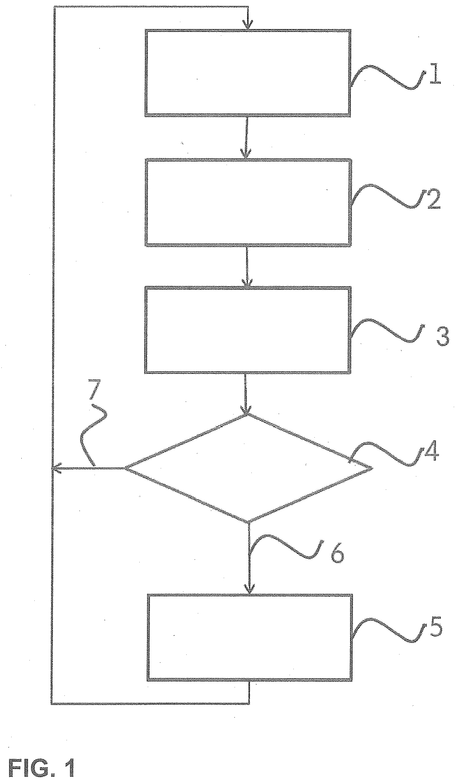

In Fig. 1 ist das erfindungsgemäße Verfahren schematisch dargestellt. Nach der Messung der Teilsegmentzeiten des ersten Zylinders und zumindest eines anderen Zylinders 1 wird ein Referenzmerkmal für die Glühzündung durch einen Vergleich von Teilsegmentzeiten des ersten Zylinders mit Teilsegmentzeiten des zumindest anderen Zylinders gebildet 2.

Anschließend wird ein Signal für die Erkennung der Glühzündung als Funktion des Vergleichs generiert 3. Das Signal wird mit dem Soll-Wert verglichen 4, in wie weit der Soll-Wert eingehalten ist. Bei der Einhaltung des Soll-Wertes 7 wird das erfindungsgemäße Verfahren erneut ausgeführt. Bei der Nichteinhaltung des Soll-Wertes 6 werden Maßnahmen gegen die Glühzündung, beispielsweise Unterbrechung der Kraftstoffzufuhr, eine Reduktion des Ladedrucks, eine Reduktion der Frischgasfüllung oder Kühlen des entsprechenden Zylinders, eingeleitet 5. Nach der Einleitung der Gegenmaßnahmen 5 wird das Verfahren erneut ausgeführt.

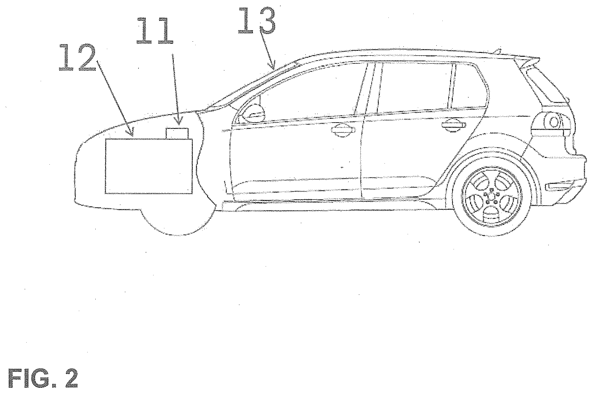

In Fig. 2 ist ein erfindungsgemäßes Fahrzeug 13 zum Teil schematisch dargestellt, das im vorderen Bereich geschnitten ist. In dem vorderen Bereich des Fahrzeugs 13 befinden sich ein Steuergerät 11 und eine Brennkraftmaschine 12. Das erfindungsgemäße Verfahren ist im Steuergerät 11 als Funktion implementiert. Über das Steuergerät 11 werden die Maßnahmen an dem Antriebstrang eingeleitet, durch welche schließlich die Vorentflammung vermieden werden kann.

**Bezugszeichenliste**

1 Messen von Teilsegmentzeiten
2. Bildung des Referenzmerkmals für eine Glühzündung
3 Generierung eines Signals für die Erkennung einer Glühzündung
4 Entscheidung: Einhaltung des Soll-Wertes
5 Maßnahmen gegen Glühzündung
6 Ja
7 Nein
11 Motorsteuergerät
12 Brennkraftmaschine
13 Kraftfahrzeug

**Patentansprüche**

1. Verfahren zur Erkennung einer Glühzündung eines Kraftstoff-Luft-Gemisches in einem Zylinderraum einer Brennkraftmaschine (12) mit wenigstens einem ersten und einem anderen Zylinder, die mit einer Kurbelwelle verbunden sind, wobei Teilsegmentzeiten des ersten Zylinders gemessen werden, wobei Teilsegmentzeiten des zumindest einen anderen Zylinders gemessen werden und ein Referenzmerkmal für die Glühzündung durch einen Vergleich von Teilsegmentzeiten des ersten Zylinders mit Teilsegmentzeiten des zumindest einen anderen Zylinders gebildet wird und anschließend ein Signal für die Erkennung der Glühzündung als Funktion des Vergleichs generiert wird, **dadurch gekennzeichnet, dass** das Referenzmerkmal aus dem Quotient aus einem von der Teilsegmentzeit des ersten Zylinders abgezogenen Mittelwert und einer Funktion der Teilsegmentzeit des ersten Zylinders gebildet wird; wobei der Mittelwert der Teilsegmentzeiten des zumindest einen anderen Zylinders über die m vorausgegangenen Zylinder und die m nachfolgenden Zylinder berechnet wird, wobei der erste Zylinder von der Mittelwertberechnung ausgenommen ist, wobei das Referenzmerkmal für m Zylinder einer Brennkraftmaschine durchfolgende Formel definiert wird:

$$\text{Referenzmerkmal } n = (\text{Teilsegmentzeit } n - 1/(2*(m-1)) * \Sigma\, i = n - m + 1, \ldots, n-1, n+1, \ldots, n+m-1 \text{Teilsegmentzeit\_}i) / \text{Teilsegmentzeit\_}n^3,$$

wobei n der in Betracht genommenen Teilsegmentzeit des ersten Zylinders entspricht und m sich auf die Anzahl aller Zylinder der Brennkraftmaschine bezieht.

2. Verfahren nach Anspruch 1, **dadurch gekennzeichnet, dass** das Signal für die Glühzündung unabhängig von einem Klopfsignal erzeugt wird.

3. Verfahren nach einem der vorherigen Ansprüche, **dadurch gekennzeichnet, dass** die Teilsegmente der Kurbelwelle frei wählbar sind.

4. Verfahren nach einem der vorherigen Ansprüche, **dadurch gekennzeichnet, dass** das Teilsegment im Bereich von oberem Totpunkt (ZOT) liegt.

5. Verfahren nach einem der vorherigen Ansprüche, **dadurch gekennzeichnet, dass** die Glühzündung erkannt wird, wenn die Teilsegmentzeit des ersten Zylinders eine festgelegte Zeitdauer gegenüber der Teilsegmentdauer zumindest des anderen Zylinders verlängert ist.

6. Verfahren nach einem der vorherigen Ansprüche, **dadurch gekennzeichnet, dass** das Referenzmerkmal die Werte Null oder eine Zahl größer Null annehmen kann.

7. Verfahren nach einem der vorherigen Ansprüche, **dadurch gekennzeichnet, dass** eine Glühzündung erkannt wird, wenn der Wert des Referenzmerkmals größer Null ist.

8. Steuergerät (11), **dadurch gekennzeichnet, dass** in einem Speicher des Steuergerätes (11) ein Programm hinterlegt ist, das wenigstens einen Teil umfasst, bei dessen Ausführung ein Verfahren gemäß einem der Ansprüche 1 bis 7 durchgeführt wird.

9. Kraftfahrzeug (13), **dadurch gekennzeichnet, dass** es ein im Kraftfahrzeug (13) befindliches Steuergerät (11) nach Anspruch 8 enthält.

**Claims**

1. Method for detecting an auto-ignition of a fuel/air mixture in a cylinder space of an internal combustion engine (12) having at least a first cylinder and another cylinder which are connected to a crankshaft, wherein partial segment times of the first cylinder are measured, wherein partial segment times of the at least one other cylinder are measured, and a reference feature for the auto-ignition is formed by a comparison of partial segment times of the first cylinder with partial segment times of the at least one other cylinder, and subsequently a signal for the detection of the auto-ignition is generated as a function of the comparison, **characterized in that** the reference feature is formed from the quotient of a mean value subtracted from the partial segment time of the first cylinder and a function of the partial segment time of the first cylinder; wherein the mean value of the partial segment times of the at least one other cylinder is calculated over the m preceding cylinders and the m following cylinders, wherein the first cylinder is excluded from the mean value calculation, wherein the reference feature is defined for m cylinders of an internal combustion engine by means of the following formula:

```
Reference   feature   n  =  (partial   segment   time
n-1/(2*(m-1))*∑i=n-m+1, …, n-1, n+1, …, n+m-1 partial
segment time_i)/partial segment time_n³,
```

where n corresponds to the considered partial segment time of the first cylinder, and m relates to the number of all the cylinders of the internal combustion engine.

2. Method according to Claim 1, **characterized in that** the signal for the auto-ignition is generated independently of a knocking signal.

3. Method according to one of the preceding claims, **characterized in that** the partial segments of the crankshaft can be freely selected.

4. Method according to one of the preceding claims, **characterized in that** the partial segment lies in the region of the top dead centre (ZOT).

5. Method according to one of the preceding claims, **characterized in that** the auto-ignition is detected if the partial segment time of the first cylinder is extended by a defined time period with respect to the partial segment period of at least the other cylinder.

6. Method according to one of the preceding claims, **characterized in that** the reference feature can assume the values of zero or a number greater than zero.

7. Method according to one of the preceding claims, **characterized in that** an auto-ignition is detected if the value of the reference feature is greater than zero.

8. Control unit (11), **characterized in that** a program is stored in a memory of the control unit (11) which comprises at least one part, upon the execution of which a method according to one of Claims 1 to 7 is carried out.

9. Motor vehicle (13), **characterized in that** it contains a control unit (11) according to Claim 8 which is located in the motor vehicle (13).

## Revendications

1. Procédé de détection d'un auto-allumage d'un mélange carburant-air dans une chambre de cylindre d'un moteur à combustion interne (12) comportant au moins un premier cylindre et un autre cylindre qui sont reliés à un vilebrequin, dans lequel des temps de segment partiels du premier cylindre sont mesurés, dans lequel des temps de segment partiels d'au moins un autre cylindre sont mesurés et une caractéristique de référence de l'auto-allumage est établie par comparaison entre des temps de segment partiels du premier cylindre et des temps de segment partiels dudit au moins un autre cylindre, puis un signal de détection de l'auto-allumage est détecté en tant que fonction de la comparaison est généré, **caractérisé en ce que** la caractéristique de référence est établie à partir du quotient d'une valeur moyenne soustraite au temps de segment partiel du premier cylindre et d'une fonction du temps de segment partiel du premier cylindre ;
dans lequel la valeur moyenne des temps de segment partiels d'au moins un autre cylindre est calculée sur les m cylindres précédents et les m cylindres suivants, dans lequel le premier cylindre est exclu du calcul de la moyenne, dans lequel la caractéristique de référence pour m cylindres d'un moteur à combustion interne est définie par la formule suivante :

```
caractéristique de référence n =(temps de segment
partiel n - 1/(2*(m-1))*Σ i= n - m + 1, ..., n-1, n+1,
..., n+m-1 Temps de segment partiel_i)/Temps de segment
partiel_n³,
```

où n correspond au temps de segment partiel considéré du premier cylindre et m désigne le nombre de tous les cylindres du moteur à combustion interne.

2. Procédé selon la revendication 1, **caractérisé en ce que** le signal d'auto-allumage est généré indépendamment d'un signal de cliquetis.

3. Procédé selon l'une des revendications précédentes, **caractérisé en ce que** les segments partiels du vilebrequin peuvent être sélectionnés librement.

4. Procédé selon l'une des revendications précédentes, **caractérisé en ce que** le segment partiel se situe dans la zone du point mort haut (ZOT).

5. Procédé selon l'une des revendications précédentes, **caractérisé en ce que** l'auto-allumage est détecté lorsque le temps de segment partiel du premier cylindre est prolongé d'une période de temps fixe par rapport au temps de segment partiel d'au moins l'autre cylindre.

6. Procédé selon l'une des revendications précédentes, **caractérisé en ce que** la caractéristique de référence peut être égale à zéro ou à un nombre supérieur à zéro.

7. Procédé selon l'une des revendications précédentes, **caractérisé en ce qu'**un auto-allumage est détecté lorsque la valeur de la caractéristique de référence est supérieure à zéro.

8. Appareil de commande (11), **caractérisé en ce qu'**un programme comprenant au moins une partie est stocké dans une mémoire de l'appareil de commande (11), lors de l'exécution duquel un procédé selon l'une des revendications 1 à 7 est mis en oeuvre.

**9.** Véhicule à moteur (13), **caractérisé en ce qu'**il comporte un appareil de commande (11) selon la revendication 8 qui est situé dans le véhicule automobile (13).

FIG. 1

FIG. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007024415 B3
- DE 19544720 C1